(19) Europäisches Patentamt / European Patent Office / Office européen des brevets

(11) **EP 4 152 274 A1**

(12) **EUROPEAN PATENT APPLICATION**

(43) Date of publication:
**22.03.2023   Bulletin 2023/12**

(21) Application number: **21197966.1**

(22) Date of filing: **21.09.2021**

(51) International Patent Classification (IPC):
**G06V 10/82** *(2022.01)*     **G06T 7/00** *(2006.01)*
**G06V 20/58** *(2022.01)*

(52) Cooperative Patent Classification (CPC):
**G06V 10/82; G06V 20/58**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **TOYOTA JIDOSHA KABUSHIKI KAISHA**
  **Toyota-shi, Aichi-ken, 471-8571 (JP)**
- **The Chancellor, Masters and Scholars of the University of Cambridge**
  **Cambridge CB2 1TN (GB)**

(72) Inventors:
- **OLMEDA REINO, Daniel**
  **1140 BRUSSELS (BE)**
- **RODDICK, Thomas**
  **CAMBRIDGE CB2 1TN (GB)**
- **BIGGS, Benjamin**
  **CAMBRIDGE CB2 1TN (GB)**
- **CIPOLLA, Roberto**
  **CAMBRIDGE CB2 1TN (GB)**

(74) Representative: **Cabinet Beau de Loménie**
**158, rue de l'Université**
**75340 Paris Cedex 07 (FR)**

(54) **SYSTEM AND METHOD FOR PREDICTING AN OCCUPANCY PROBABILITY OF A POINT IN AN ENVIRONMENT, AND TRAINING METHOD THEREOF**

(57)     A system (10) for predicting an occupancy probability of at least one point (x) in an environment, based on at least one image (12) of said environment, the system (10) comprising an image encoder (20) configured to extract features (22) from the at least one image (12), a detection module (30) configured to detect at least one object in the image (12) and to associate shape information (32) to the detected at least one object, and an implicit function network (50) configured to predict the occupancy probability ($p(\hat{o})$) based on the features (22) and the shape information (32). A related method and a method for training such a system are further disclosed herein.

FIG. 1

EP 4 152 274 A1

**Description**

TECHNICAL FIELD

The present disclosure relates to environment detection, and more particularly to a system for predicting an occupancy probability of at least one point in an environment. The method may find applications in all kinds of industries, including the automotive industry. For instance, the method may be used to understand or reconstruct a vehicle's environment in order to adequately control it.

TECHNOLOGICAL BACKGROUND

Understanding the three-dimensional structure of a scene is an essential element of applications that interact with the real world, a prime example of which are autonomous vehicles. The ability of algorithms to capture complex detail within a scene determines the level to which the scene can be understood. Cuboidal bounding boxes may be used to capture the geometry of objects within a scene, such as cars and pedestrians. They encode the relative position, extent and pose of the object and enable applications such as tracking and trajectory forecasting. However, there are many instances where this coarse representation is insufficient. Consider for example a car with its door open; a truck with an overhanging load; or a pile of amorphous debris. Such variations are difficult to represent with a simple 3D bounding box, and yet to identify their extents accurately is critical for safely interacting with them.

Although other approaches have been proposed, there is still a need for a system and method for more accurately determining the occupancy of points in an environment.

SUMMARY

In this respect, the present disclosure relates to a system for predicting an occupancy probability of at least one point in an environment, based on at least one image of said environment, the system comprising an image encoder configured to extract features from the at least one image, a detection module configured to detect at least one object in the image and to associate shape information to the detected at least one object, and an implicit function network configured to predict the occupancy probability based on the features and the shape information.

The at least one image may be acquired, e.g. through an image acquisition module such as a camera, or obtained as an already acquired image from a database, e.g. a local or distant server or the like. Hereinafter, unless otherwise stated, "the image" refers to the at least one image. More generally, hereinafter, the article "the" may refer to "the at least one". The image may be a digital image.

The environment may be defined as the domain on which the system is intended to predict occupancy probabilities. The extent of the domain may be greater than what can be seen in the image. In the present disclosure, the environment may also be referred to as a scene.

The occupancy probability of a point is the probability that this point is occupied by an object, e.g. by a vehicle, a pedestrian, an object, a wall, a building, a tree, etc. In the present disclosure, unless otherwise mentioned, the term "object" includes people.

The image encoder may be computer-implemented. In an example, the image encoder may comprise a machine learning model. A machine learning model may comprise one or more mathematical expressions configured to process the image in order to extract features from that image. Weights of the machine learning model may be iteratively updated by a training method. The machine learning model may comprise an artificial neural network, e.g. a convolutional neural network.

An artificial neural network (ANN) is a computational model with one or more neurons, each neuron having a transfer function. The ANN therefore has a global transfer function that allows the calculation of at least one output as a function of at least one input. The neurons may be structured in one or more layers. The transfer functions of each neuron or the relative weights of the neurons in the network can be weighted by coefficients called synaptic weights (or simply weights) and bias. The weights can be modulated according to the training of the ANN. In principle, training comprises providing the ANN with a set of situations in which inputs and outputs are known. During the training process, the ANN adapts its synaptic weights and biases to conform to the learned situations, possibly with some tolerance. The weights and biases, once determined at the end of the training phase, may then remain constant or not during the exploitation phase.

The detection module is configured to detect at least one object in the image and to associate shape information to the at least one detected object. Therefore, the detection module is configured not only to detect that an object is present in the image and where the object is present in the image, but also to determine shape information to be associated with that object. The shape information is information defining at least some aspects of the shape of the object, such as one or more dimensions, aspect ratios, the overall shape, reference points, etc. If the detection module detects a plurality of objects, it may associate respective shape information to some or each of the detected objects, such that the shape information associated to an object corresponds to that object.

The detection module may be computer-implemented. In an example, the detection module may comprise a machine learning model, e.g. a neural network, e.g. a convolutional neural network.

It should be noted that the shape information is explicit information about the shape of the object, relying on values having a physical meaning in the environment, such as point coordinates, dimensions, angles, etc. The shape information thereby differs from implicit information contained in the features output by the image encoder.

The implicit function network is a neural network relying on deep implicit functions, as known *per se* in the art. In the present disclosure, the implicit function network takes the features and the shape information as an input, and outputs the occupancy probability of at least one desired point (i.e. any chosen point) of the environment.

The implicit function network is computer-implemented.

The implicit function network enables to build a more expressive representation of the environment and to reconstruct the environment geometry at an arbitrary resolution, without the extreme memory constraints required by other dense reconstruction methods such as 3D occupancy grids. Indeed, the implicit function network can learn from high resolution objects (e.g. objects nearby) and infer high resolution for low resolution objects (e.g. objects which are further away), whereas with a mere range-finding sensor or an imaging system, the point density would drop with distance.

In addition, by detecting objects on the image and providing the shape information as an input, explicit guidance is provided to the implicit function network, which makes the implicit function network able to generate a more accurate occupancy probability, even for some points which are not apparent in the image. That is, the shape information is used as a so-called prior for the implicit function network. This helps to alleviate the uncertainty present in large-scale outdoor scene, due to blurred occupancy predictions. Therefore, reconstruction of large-scale outdoor scene is possible, whereas implicit function networks alone may only reconstruct individual objects, people or bounded indoor scenes. All in all, the proposed system has enhanced occupancy prediction accuracy and enables reconstructing occluded areas of the environment.

Optionally, the shape information defines a bounding box of the detected at least one object. A detection module configured to detect an object in an image and to associate a bounding box therewith is known *per se* in the art and relatively simple to implement. While bounding boxes are a minimal expression of an object geometry and do not entirely capture full information about the object, they can efficiently serve as priors to guide the implicit function network towards more accurate occupancy predictions. The bounding box may be cuboid or have another shape, such as a Gaussian distribution or a zeppelin shape. The shape being generic or specific to the category of object that is detected. The bounding box may encode the position, dimensions and pose of the object.

Optionally, the shape information comprises dimensions of the bounding box and/or an offset of the at least one point in a local coordinate system of the bounding box.

Optionally, the detection module is further configured to determine a category of the detected at least one object, and the implicit function network is configured to take the category as an input to predict the occupancy probability. Classifying detected objects in categories can be easily performed by the detection module and provides further guidance to the implicit function network, thereby enhancing the accuracy of the system.

Optionally, the at least one image is a single monocular image. In these embodiments, the system requires very simple and inexpensive inputs. In these embodiments, the detection module may comprise a monocular object detector.

Optionally, the environment is a three-dimensional outdoor scene and the at least one image is two-dimensional. Thanks to the shape information, the system can determine the occupancy probability in a third dimension with enhanced accuracy although the image only provides 2D input. In other embodiments, the environment may have more or less than three dimensions (e.g. including time as a fourth dimension), and the image may have more or less than two dimensions. The environment may have more dimensions than the image.

Optionally, the system further comprises a conditioning module configured to receive the features from the image encoder, to sample the features at a location corresponding to a projection of the at least one point into the at least one image in order to generate a conditioning vector, and to output the conditioning vector to the implicit function network.

The location is a location in the image, whereas the point may have other coordinates in the actual environment. Therefore, the location is determined thanks to a projection of the point in the image.

Given that location, the conditioning module helps extracting those of the features which provide useful information, and outputs them as a conditioning vector to condition the implicit function network. The conditioning vector helps conditioning the implicit function network on the location and pose, which lowers the internal uncertainty of the implicit function network on solutions that match the shape information.

The present disclosure is further directed to a scene reconstruction device, comprising the system as previously described, and a display configured to solidly display the points, the occupancy probability of which equals or exceeds a threshold. The occupancy probability is predicted by the previously described system.

The present disclosure is further directed to a method for predicting an occupancy probability of at least one point in an environment, based on at least one image of said environment, the method comprising extracting features from the at least one image, detecting at least one object in the image and associating shape information to the detected at least one object, and predicting the occupancy probability with an implicit function network, based on the features and the shape information.

The method may be computer-implemented. The method may be carried out by the system as described above, and may have any of the features described in relation to the system.

The present disclosure is further directed to a training method for training the above-described system, comprising obtaining at least one image of an environment, obtaining sparse sensor data acquired by a sensor in the environment, deriving pseudo-ground-truth data for the occupancy probability from the sparse sensor data, and training the system with the at least one image and the pseudo-ground-truth data.

While most previous works rely on comprehensive, watertight meshes as ground truth to train their implicit functions, for large scale scenes, no such data is available and building it would be both time-consuming and expensive. In this perspective, the proposed training method uses sparse sensor data which can be more easily acquired in the environment. For example, modern vehicles are equipped with cameras, which can serve as the above-mentioned image acquisition modules, and range-finding sensors configured to acquire sparse data from the environment. The pseudo-ground-truth can be automatically derived from such sparse sensor data, which are easily obtainable and are freely provided by many recent autonomous driving datasets.

The range-finding sensor may be optical (e.g. LiDAR), electromagnetic (e.g. RADAR), acoustical (e.g. SONAR), etc. Alternatively, other types of sensors may be used, such as a 3D imaging system.

Therefore, the proposed training method enables to build a large scale dataset suitable for training the system based on otherwise available data, namely the sparse sensor data. The training method does not require 3D meshes or synthetic data and is thus easier to carry out.

Optionally, the deriving pseudo-ground-truth data comprises evaluating occupancy probabilities for points on a straight line extending from an acquisition point of the sparse sensor data and through a given point belonging to the sparse sensor data, wherein the given point is determined to have a high occupancy probability, the points between the acquisition point and the given point are determined to have a low occupancy probability, and the points from the given point and beyond are determined to have a decreasing probability from the high probability to an intermediate probability greater than the low probability.

The acquisition point of the sparse sensor data is the location of the sensor, from which the sparse sensor data are acquired. For most sensors, acquisition of data at a given point occurs along a straight line from the acquisition point to the given point, which enables to determine occupancy probabilities along a straight line (specifically a half-line or a ray) extending from the acquisition point to the given point and beyond.

Basically, the occupancy probability is assumed to be low between the acquisition point and the given point, because the sensor can "see" the given point. Conversely, the occupancy probability is assumed to be high at the given point, because it is detected by the sensor (i.e. it belongs to the sparse sensor data). Beyond the given point generally corresponds to an occluded zone, to which a decreasing occupancy probability is allocated. That is, the occupancy probability is high at the given point and decreasing when further marching the ray away from the given point.

Thus, the set of ground-truth occupancy probabilities can be augmented although based on discrete data.

High and low are to be understood as relative terms, in comparison to each other. The values of the high occupancy probability, the low occupancy probability and the intermediate occupancy probability may be predetermined (e.g. as hyperparameters).

Optionally, the sparse sensor data include data acquired from a plurality of poses of the sensor. Unless explicitly mentioned otherwise, a pose of the sensor (respectively of an object) includes a location and/or an orientation of the sensor (respectively of the object). By taking account of data acquired from a plurality of poses, e.g. along a trajectory of a vehicle to which the sensor is mounted, the pseudo-ground-truth data can be determined more accurately, and therefore the system can be better trained.

Optionally, the training method comprises sampling points of the environment for training based on at least one sampling strategy selected from a group comprising:

- a surface strategy giving a greater importance to a training point close to points for which sparse sensor data is available than to a training point away from said points.
- a uniform strategy giving uniform importance to training points uniformly selected along a straight line segment from an acquisition point of the sparse sensor data to a given point belonging to the sparse sensor data;
- a sparse strategy assigning a low occupancy probability to training points selected in a region of the environment where a density of the sparse sensor data is relatively small; and
- an object-centric strategy giving a greater importance to training points which belong to objects of the environment for which the amount of sparse sensor data is relatively small.

The training points are points of the environment belonging to the pseudo-ground-truth data. It would be unnecessarily costly to train the system on all the available training points derived from the sparse sensor data. Thanks to one or more of the sampling strategies, the training method selects and samples training points which are more significant for training the system. The above-mentioned "importance" reflects the likelihood of a training point to be sampled. Therefore, the system is better trained at a reasonable computational cost.

In the sparse strategy, new training points with a low occupancy probability are added in regions having a relatively small density of previously present training points.

Optionally, the training method comprises augmenting the sparse sensor data by considering the symmetry of objects detected by the sensor. Therefore, areas which are occluded to the sensor can be reconstructed by leveraging the known symmetry of some objects such as cars, people, etc. The symmetry itself, or the type of object, may be detected by another sensor, e.g. based on the above-mentioned image of the environment.

The present disclosure is further related to a computer program including instructions for executing the steps of the above described method when said program is executed by a computer. This program can use any programming language and take the form of source code, object code or a code intermediate between source code and object code, such as a partially compiled form, or any other desirable form.

The present disclosure is further related to a recording medium readable by a computer and having recorded thereon a computer program including instructions for executing the steps of the above described method. The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

BRIEF DESCRIPTION OF THE DRAWINGS

The invention and advantages thereof will be better understood upon reading the detailed description which follows, of embodiments given as non-limiting examples. This description refers to the appended drawings, wherein:

- Fig. 1 is a diagram of a system according to an embodiment;
- Fig. 2 is a chart illustrating an inverse sensor model to produce pseudo-ground-truth data;
- Fig. 3 is a flowchart illustrating a training method according to an embodiment;
- Fig. 4 shows a plurality of images and the corresponding reconstruction achieved by a scene reconstruction device according to an embodiment.

DETAILED DESCRIPTION OF EMBODIMENTS

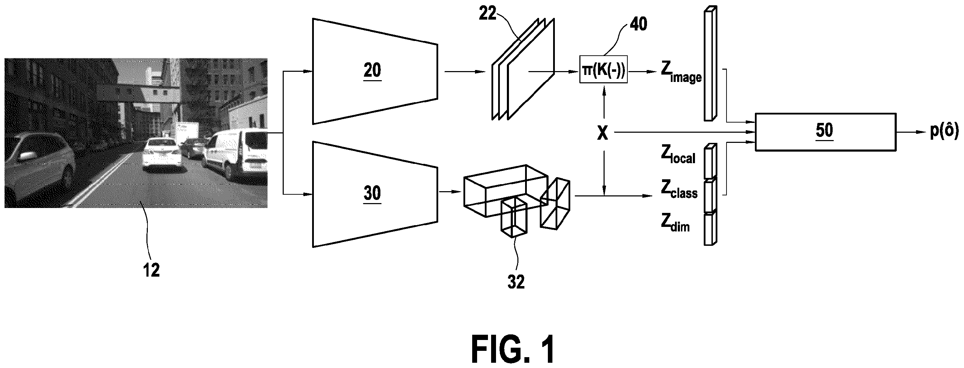

Figure 1 shows a diagram of a system 10 comprising an image encoder 20, a detection module 30 and an implicit function network 50 according to embodiments of the present disclosure. The system 10 may have various further functions, e.g. may be a robotic system or a camera system. It may further by integrated in a vehicle.

The system 10 may comprise an electronic circuit, a processor (shared, dedicated, or group), a combinational logic circuit, a memory that executes one or more software programs, and/or other suitable components that provide the described functionality. In other words, the system 10 may be a computer device. The system 10 may be connected to a memory, which may store data, e.g. a computer program which when executed, carries out the method according to the present disclosure. In particular, the detection system or the memory may store software which comprises the neural network according to the present disclosure.

The system 10, in particular the image encoder 20 and the detection module 30, has an input for receiving at least one image 12. In particular, the system 10, e.g. the image encoder 20 and/or the detection module 30, may be connected to an optical sensor, in particular a digital camera. The digital camera is configured such that it can record a scene, and in particular output digital data to the system 10, in particular the image encoder 20 and the detection module 30.

In this embodiment, the at least one image 12 is a single monocular image. The image 12 may be acquired from an in-vehicle camera. However, other types of images can be processed by the system. In the following, it is assumed, without any loss of generality, that the image is a two-dimensional image.

If the system is to operate in real time, the at least one image 12 may be acquired in real time by an image acquisition module, such as a video acquisition module, e.g. a camera or the like (video cameras, photo cameras, etc.). Alternatively or in addition, the at least one image may be acquired beforehand, and obtained by the system 10 later, e.g. in case of post-processing of the acquired image.

The image encoder 20 may be implemented as software running on the system 10 or as a hardware element of the system 10. The image encoder 20 carries out a computer vision algorithm for extracting features 22 from the at least one image 12.

Furthermore, also the detection module 30 may be implemented as software running on the system 10 or as a hardware element of the system 10. The detection module 30 carries out a computer vision algorithm for detecting at least one object in the image 12 and associating shape information 32 to the detected object(s).

Finally, the implicit function network 50 may be implemented as software running on the system 10 or as a hardware element of the system 10. The implicit function network 50 carries out occupancy probability prediction based on the features and the shape information.

In particular, the system 10 may comprise a neural network which includes the image encoder 20, the detection module 30 and the implicit function network 50. Alternatively, the image encoder 20, the detection module 30 and the implicit function network 50 may be realized as independent neural networks beside on another.

The system 10 may be used in the context of a driving method for a vehicle, and may comprise a control unit configured to control the vehicle based on the predicted occupancy probability output by the implicit function network 50, e.g. to perform assisted or autonomous driving. Of course, other applications are also envisaged.

In the following, it is assumed that the environment is a 3D environment representing an outdoor scene. However, other environments are encompassed, and/or environments representing other scenes. Furthermore, although the described embodiment focuses on occupancy probabilities predicted with the aim of reconstructing the environment, other applications of the predicted occupancy probabilities are encompassed.

So, the objective of the present embodiment is to recover a full 3D reconstruction of a large-scale outdoor scene using a single monocular image as input. The 3D structure of the scene is represented in the form of an occupancy function $f_\theta$, which maps a 3D point $x \in \mathbb{R}^3$ (e.g. a point of the environment) to the probability $p(\hat{o})$ that the point lies inside the solid surface of the scene:

$$p(\hat{o}) = f_\theta(x, z) \in [0,1] \qquad (1)$$

where $z \in \mathbb{R}^n$ is a conditioning feature vector (described hereinafter) corresponding to the point $x$ and $\hat{o}$ is the occupancy:

$$\hat{o} = \begin{cases} 1 & \text{if x is inside the surface} \\ 0 & \text{otherwise} \end{cases}$$

In this embodiment, the occupancy function $f_\theta$ takes the form of a neural network, namely the implicit function network 50, which is trained to minimise the binary cross entropy loss between the predicted and ground truth occupancy over a set of randomly sampled points $\{x_i\}$:

$$\mathcal{L}(\hat{o}, o) = \sum_i o_i \log\left(f_\theta(x_i, z_i)\right) + (1 - o_i) \log\left(1 - f_\theta(x_i, z_i)\right). \qquad (2)$$

At inference time the 3D surface of the scene can then be extracted by computing the level set corresponding to $f_\theta(x,z) = 0.5$. Of course, other thresholds than 0.5 may be used.

In order to reconstruct the fine-grained details of the scene, the system 10 may adopt the pixel-aligned implicit function approach of Saito et al. (Shunsuke Saito, Zeng Huang, Ryota Natsume, Shigeo Morishima, Angjoo Kanazawa, and Hao Li. Pifu: Pixel-aligned implicit function for high-resolution clothed human digitization. In Proceedings of the IEEE/CVF International Conference on Computer Vision, pages 2304-2314, 2019.) to obtain the conditioning vector z from a single-view input image *I*. This begins by transforming the image into a dense feature representation by passing the image through a convolutional image encoder 20 applying a transformation *g*, resulting in a set of spatial feature maps (or features) 22 derived as $F = g(I)$. For each 3D query point x, the conditioning vector z, also denoted as $z_{image}$ (see hereinafter), may then be obtained by sampling the feature maps (features 22) at the location corresponding to the projection of x into the image:

$$z = F(\pi(Kx)), \qquad (3)$$

where $\pi$ is the 2D perspective projection operator and K is the 3x3 camera intrinsics matrix, which is assumed to be known at test time.

Thus, in this embodiment, the system 10 further comprises a conditioning module 40 configured to receive the features 22 from the image encoder 20, to sample the features 22 at a location corresponding to a projection of the at least one point $x$ into the at least one image 12 in order to generate a conditioning vector $z$, and to output the conditioning vector $z$ to the implicit function network 50.

The probability occupancy for the point $x$ is then obtained by passing $x$ and $z$ through the implicit function network 50, which is the fully-connected occupancy network $f_\theta$. At inference time, an entire scene may be reconstructed by sampling the points x over a dense grid in space and applying the marching cubes algorithm of Lorensen and Cline (William E Lorensen and Harvey E Cline. Marching cubes: A high resolution 3D surface construction algorithm. ACM siggraph computer graphics, 21(4):163-169, 1987.) to generate the final output mesh.

One of the major challenges of reconstructing large-scale outdoor scenes from a single view is that there is a high degree of uncertainty in estimating the depth of surfaces in the scene. This uncertainty can manifest as low-quality reconstructions or missed objects where the network blurs the predicted occupancy probability over multiple possible depth values. As mentioned earlier, some of this uncertainty can be alleviated and the network can be forced to commit to a particular set of depth values by providing shape information of detected objects in the image, e.g. a set of known reference points within the scene.

To this end, the detection module 30 is used to detect objects in the image 12 and associate shape information 32 therewith. The shape information is then input to the implicit function network 50, e.g. as an additional part of the conditioning vector z.

Specifically, as illustrated in Fig. 1, in this embodiment, the shape information 32 defines a bounding box of each detected object. The bounding box may be a 3D bounding box, i.e. having the same dimensionality as the environment (and not only as the image 12). It is possible to obtain accurate 3D bounding boxes of objects of interest, such as cars and pedestrians, from a single monocular image. For instance, the detection module 30 can be built following the principles of one or more of the following papers:

- Yuxuan Liu, Yuan Yixuan, and Ming Liu. Ground-aware monocular 3d object detection for autonomous driving. IEEE Robotics and Automation Letters, 6(2):919-926, 2021.
- Andrea Simonelli, Samuel Rota Bulo, Lorenzo Porzi, Manuel Lopez-Antequera, and Peter Kontschieder. Disentangling monocular 3d object detection. In Proceedings of the IEEE/CVF International Conference on Computer Vision, pages 1991-1999, 2019.
- Garrick Brazil and Xiaoming Liu. M3d-rpn: Monocular 3d region proposal network for object detection. In Proceedings of the IEEE/CVF International Conference on Computer Vision, pages 9287-9296, 2019.
- Thomas Roddick, Alex Kendall, and Roberto Cipolla. Orthographic feature transform for monocular 3d object detection. British Machine Vision Conference, 2019.

The predicted bounding boxes provide fixed anchor points within the scene, allowing the implicit function network 50 to resolve some of the depth uncertainty and exploit detailed prior knowledge of the shapes of common objects such as cars and pedestrians.

Let $x$ be a point which lies within a predicted bounding box $b_n$. In addition to the image feature conditioning vector $z$, which is renamed $z_{image}$, a set of features $z_{box}$ derived from the bounding box 32 is additionally provided to the implicit function network 50. Specifically, $z_{box}$ comprises at least one of, and here all of: $z_{local} \in \mathbb{R}^3$ : The offset of the point $x$ in the box's local coordinate system, obtained by multiplying $x$ by the inverse of the object pose $Q_n^{-1}$.

$z_{dim} \in \mathbb{R}^3$ : The dimensions of the bounding box $d_n$.

$z_{class} \in \{0,1\}^{|C|}$: A one-hot encoding of the object category $c_n \in C$, e.g. car, pedestrian, etc. The encoding does not have to be one-hot, and more generally, the detection module 30 may be configured to determine a category of the detected object, and the implicit function network 50 is configured to take the category as an input to predict the occupancy probability.

The final conditioning vector z, as used in (1) and (2), is then simply the concatenation of the individual features $z = (z_{image}, z_{local}, z_{dim}, z_{class})$, or $z = (z_{image}, z_{box})$. For points which do not lie inside any predicted bounding boxes, $z_{local}$ and $z_{dim}$ may be set to zero and $z_{class}$ may be set to a label corresponding to the background class.

The system 10 is able to carry out a method for predicting an occupancy probability of at least one point $x$ in an environment, based on at least one image 12 of said environment, the method comprising extracting features 22 from the at least one image 12, detecting at least one object in the image and associating shape information 32 to the detected at least one object, and predicting the occupancy probability $p(\hat{o})$ with an implicit function network 50, based on the features 22 and the shape information 32.

In order to train an implicit occupancy function $f_{\theta}(x,z)$ as described above, it is necessary to sample arbitrary 3D points $x$ in the environment and determine their ground truth occupancy $o$. For real-world outdoor scenes, watertight 3D meshes which can be used to query the ground truth occupancy state of the world, are not generally available. However, observations from a range sensor such as a LiDAR system, which are widely available in datasets designed for autonomous driving, provide a strong prior estimate of the occupancy state of points which lie along the returned rays.

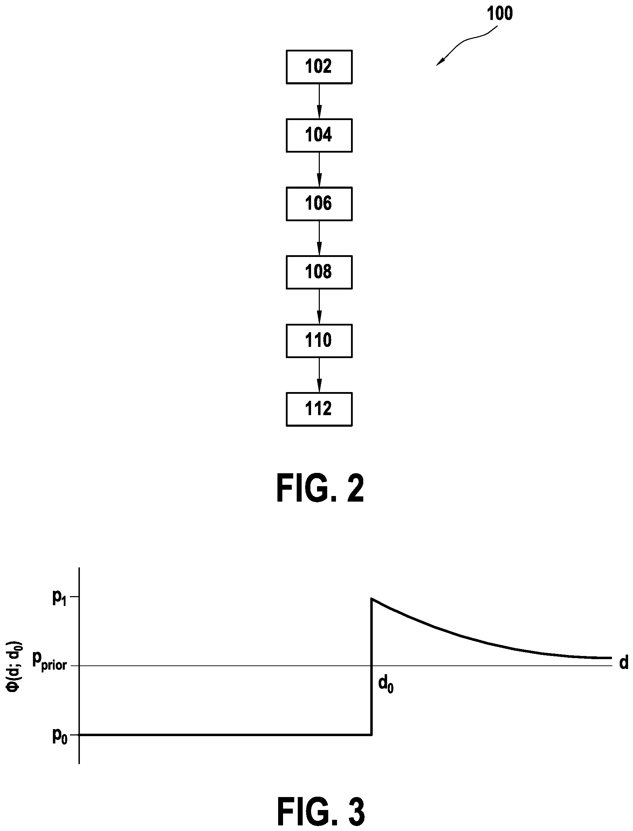

Thus, a training method 100 for training the above-described system 10, illustrated in Fig. 2, comprises a step 102 obtaining at least one image 12 of an environment, a step 104 of obtaining sparse sensor data acquired by a sensor (e.g. the range sensor) in the environment, a step 106 of deriving pseudo-ground-truth data for the occupancy probability from the sparse sensor data, and a step 112 of training the system 10 with the at least one image 12 and the pseudo-ground-truth data.

Let r be a LiDAR ray, which starts from a starting point $s$ (i.e. an acquisition point) and terminates at an end point $e$ at a solid surface a distance $d_0$ along the ray. For a point $x$ which lies at a distance $d$ along the ray, it can be inferred that if $d < d_0$, it is highly likely that the point $x$ represents free space, since the LiDAR ray was unobstructed by any surface closer than $d_0$. Similarly, for points where $d > d_0$, there is a high likelihood that the point lies inside an object since it is known that $d_0$ lies on the surface. This prior knowledge can be encoded in the form of an inverse sensor model, which approximates the probability of occupancy $p(o) = \Phi(d; d_0)$ for a point a distance d along the ray, given an observed LiDAR return at distance $d_0$. In this embodiment, the adopted heuristic inverse sensor model is of the form

$$\Phi(d; d_0) = \begin{cases} p_0 & \text{if } d < d_0 \\ p_{prior} + (p_1 - p_{prior})e^{-\alpha(d-d_0)} & \text{otherwise} \end{cases} \quad (4)$$

and is illustrated in Fig. 3.

In practice, real LiDAR point clouds exhibit noise due to reflection and other effects, so the terms $p_0 = p(o|d < d_0)$ and $p_1 = p(o|d = d_0)$ allow introducing some uncertainty into the estimated occupancy values. Meanwhile, the exponential decay factor $e^{-\alpha(d-d_0)}$ encodes the fact that for points which lie just beyond the surface, it can be reasonably assumed that the point is inside the object. For points where $d >> d_0$, however, it is unclear whether the point is still inside the object or whether it has emerged from the occluded back face, so p(o) is set to a prior probability of occupancy $p_{prior}$. Using this heuristic, the implicit function network 50 can be trained by replacing the ground truth occupancy state o from (2) with pseudo-ground-truth, i.e. the approximate occupancy probability p(o).

Therefore, in this embodiment of the training method 100, the step 106 of deriving pseudo-ground-truth data comprises evaluating occupancy probabilities for points $x$ on a straight line (the ray) extending from an acquisition point $s$ of the sparse sensor data and through a given point e belonging to the sparse sensor data, wherein the given point e is determined to have a high occupancy probability $p_1$, points between the acquisition point $s$ and the given point e are determined to have a low occupancy probability $p_0$, and points from the given point $e$ and beyond are determined to have a decreasing probability (here exponentially decreasing, but other decreases may be used) from the high probability $p_1$ to an intermediate probability $p_{prior}$ greater than the low probability $p_0$.

The proposed system 10 intends to reconstruct the full 3D geometry of the scene, including surfaces which are not visible on the image, e.g. occluded or facing away from the camera. However, a limitation of the above approach is that typically the LiDAR point cloud (i.e. the sparse sensor data) is captured from the same perspective as the camera system, meaning that pseudo-ground truth can only be obtained for points which are visible to the camera. Furthermore, LiDAR point clouds are typically sparse, with distant objects returning only a handful of points. Fortunately, many autonomous driving datasets comprise sequences captured from a moving vehicle, meaning that multiple views of the same scene can be obtained by combining LiDAR point clouds across time. Consider a trajectory T which comprises a sequence of ego-vehicle poses $T = \{P_t\}$, $P \in SO(3)$ at times t. Note that P is a transformation matrix which includes both translation and rotation information. Each LiDAR ray $r_{it}$ captured at time $t$ can be mapped into the target frame at time $t_0$ by applying the rigid-body transformation $P_{t_0}^{-1}P_t$ to the start and end points of the ray. Aggregating across the entire sequence results in a dense set of rays which capture the surfaces of the scene from multiple perspectives. In other words, this results in the sparse sensor data including data acquired from a plurality of poses of the sensor.

The above approach assumes the scene is static: a rarely satisfied assumption for traffic scenes. However, ground truth bounding boxes $b_{nt}$ for most dynamic objects in the scene are available in the same autonomous driving datasets, in the form of the object pose $Q_{nt} \in SO(3)$ and dimensions $d_n \in \mathbb{R}^3$ for object $n$ at time $t$. Each LiDAR ray

$r_{it}$ that intersects the bounding box $b_{nt}$ can be mapped to the target frame by applying the rigid-body transformation $P_{t_0}^{-1} Q_{nt_0} Q_{nt}^{-1} P_t$.

Despite aggregating rays across multiple frames as described above, many parts of the scene will still only be visible from one side. For objects, such as vehicles, with 3D bounding boxes provided, the rays can be further densified by taking advantage of simple bilateral symmetry constraints. For each ray which intersects a 3D bounding box, a duplicate ray, which is a mirror image about the vertical plane, is appended. That is, the training method comprises a step 108 of augmenting the sparse sensor data by considering the symmetry of the objects detected by the sensor. Of course, the plane of symmetry may depend on the type and orientation of the detected object, which may be otherwise determined. This applies not only to vehicles but also to any object known to have certain symmetry.

The training method 100 may further comprise a step 110 of sampling points for training. The success of occupancy networks can be further enhanced by the strategy used to sample points at training time; methods balance uniformly spanning the volume of interest against choosing points which provide useful training signal. In the training method 100, the problem is particularly challenging since the ground truth occupancy (pseudo-ground truth) is only defined for points which lie along LiDAR rays.

In an embodiment, the training method 100 comprises a step 110 of applying at least one of the following sampling strategies, and possibly a weighted combination of the following strategies, #1 to #4.

#1 A surface strategy giving a greater importance to a training point close to points for which sparse sensor data is available than to a training point away from said points: in order to maximise the discriminative power of the implicit function network 50, the most useful training signal comes from points which lie close to the surface of objects. Although the true surface of the scene is not known, the endpoints of the LiDAR rays r provide a sparse approximation. Given a ray r with start and end points ($s,e$), step 110 samples points $x$ by applying random Gaussian noise to the end point along the direction of the ray

$$x = e + \epsilon \frac{e - s}{|e - s|}, \quad \epsilon \sim N(0, \sigma) \tag{5}$$

#2 A uniform strategy giving uniform importance to training points uniformly selected along a straight line segment from an acquisition point of the sparse sensor data to a given point belonging to the sparse sensor data: sampling points exclusively around surfaces as in #1 may cause the method to overfit and fail in regions of large open space, which for road scenarios form the majority of the scene. Unfortunately, the uniform sampling strategy used by other works cannot be applied as such since in the present case the occupancy (pseudo-ground-truth) is only defined along the LiDAR rays r. Instead, an approximation to uniform sampling may be obtained as follows. First, each ray is clipped to the visible volume of the scene, resulting in clipped rays $\bar{r} = (\bar{s}, \bar{e})$. Rays which intersect objects are clipped to the intersecting object bounding box $b$. Then $N$ points are randomly sampled along each clipped ray, where $N$ is proportional to the length $|\bar{e} - \bar{s}|$. The sampled points $x$ are taken uniformly between the start and end point of the clipped ray:

$$x = (1 - \eta)\bar{s} + \eta\bar{e}, \quad \eta \sim U(0,1) \tag{6}$$

#3 A sparse strategy assigning a low occupancy probability to training points selected in a region of the environment where a density of training points is relatively small: for some parts of the scene, the number of LiDAR rays passing through a given region can be relatively small, for example regions in the sky where many of the returns are invalid. To encourage low occupancy probability in these regions, the scene is first divided into coarse voxels and the number of rays passing through each voxel is computed. For voxels where the number of rays is below a certain threshold, points are uniformly sampled over the voxel, and the ground truth occupancy of these points is set to a low value. This helps avoid 'cave' artifacts which can occur due to lack of supervision in the sky region. The low occupancy probability assigned in the sparse strategy may be the same as or different from the above-mentioned low probability $p_0$.

#4 An object-centric strategy giving a greater importance to training points which belong to objects of the environment for which the amount of sparse sensor data is relatively small: in traffic scenes, much of the structure of the road, buildings etc. is relatively uniform, and provides little useful training information to the implicit function network 50. To encourage the implicit function network 50 to focus more on objects of interest such as cars, pedestrians etc., an inverse frequency weighting is applied to the surface strategy #1 and the uniform strategy #2 described above, such that rays which intersect objects with fewer LiDAR returns are sampled more frequently. The weighting factor $w_n$ for object $n$ may be given by $(N_n/N_T)^{-\gamma}$, where $N_n$ is the number of rays intersecting object $n$, $N_T$ is the total number of rays, and $\gamma$ is a hyperparameter.

The following description refers to an evaluation example of the system 10. The system 10 is benchmarked using the NuScenes dataset (Holger Caesar, Varun Bankiti, Alex H Lang, Sourabh Vora, Venice Erin Liong, Qiang Xu, Anush Krishnan, Yu Pan, Giancarlo Baldan, and Oscar Beijbom. NuScenes: A multimodal dataset for autonomous driving. In Proceedings of the IEEE/CVF conference on computer vision and pattern recognition, pages 11621-11631, 2020.). NuScenes is a large-scale autonomous driving dataset consisting of 850 sequences captured over four international locations. It provides multi-modal data including six surround view camera images, LiDAR point-clouds, and densely-annotated ground bounding boxes which allow applying the LiDAR augmentation strategy as described above. The evaluation focusses on the front-facing camera images only, and adopts the dataset splits of Roddick et al. (Thomas Roddick and Roberto Cipolla. Predicting semantic map representations from images using pyramid occupancy networks. In Proceedings of the IEEE/CVF Conference on Computer Vision and Pattern Recognition (CVPR), June 2020) to avoid overfitting to the geometry of scenes which appear in both the default training and validation sets.

As mentioned above, the system 10 uses the implicit function network 50 of above-quoted Saito et al., which comprises a five-stage multi-layer perceptron with skip connections to the input features z before the 2nd, 3rd and 4th layers. Differently from Saito et al., in the system 10, an image encoder 20 based on a standard ResNet-50 network (Kaiming He, Xiangyu Zhang, Shaoqing Ren, and Jian Sun. Deep residual learning for image recognition. In Proceedings of the IEEE conference on computer vision and pattern recognition, pages 770-778, 2016.), pre-trained on ImageNet (J. Deng, W. Dong, R. Socher, L. Li, Kai Li, and Li Fei-Fei. ImageNet: A large-scale hierarchical image database. In 2009 IEEE Conference on Computer Vision and Pattern Recognition, pages 248-255, 2009.) is selected as it turns out to be most effective. To obtain the image conditioning vector $z_{image}$, the conditioning module 40 samples features from the 3rd, 4th and 5th stages of the image encoder network (image encoder 20) using the camera parameters K provided by the NuScenes dataset. To condition the implicit function network 50 on 3D object bounding boxes, the detection module 30 includes the above-quoted state-of-the-art monocular 3D object detector of Liu et al., which is pretrained on the KITTI dataset (Andreas Geiger, Philip Lenz, and Raquel Urtasun. Are we ready for autonomous driving? The KITTI vision benchmark suite. In 2012 IEEE Conference on Computer Vision and Pattern Recognition, pages 3354-3361. IEEE, 2012) and then fine-tuned on NuScenes.

The system 10 is trained using a balanced version of the cross-entropy loss in (2) where the loss corresponding to positive (p(o) > 0.5) and negative (p(o) < 0.5) samples are weighted according to $w_{pos} = N_T/N_{pos}$ and $w_{neg} = N_T/N_{neg}$ respectively, where $N_{pos}$ and $N_{neg}$ are the number of positive and negative samples. For each training image 10000 points are sampled, according to the surface, uniform and sparse sampling strategies described above, in the ratio 45:45:10. The object-centric sampling strategy is also applied to the surface sampler and to the uniform sampler with an exponent of $\gamma = 0.1$. For the inverse sensor model discussed above, values are set to $p_0 = 0$, $p_1 = 1$ and $p_{prior} = 0.5$ for simplicity, and $\alpha = 0.01$ is selected for the decay factor. The model is trained using stochastic gradient descent with a learning rate of 0.1, momentum factor 0.9 and weight decay $10^{-4}$.

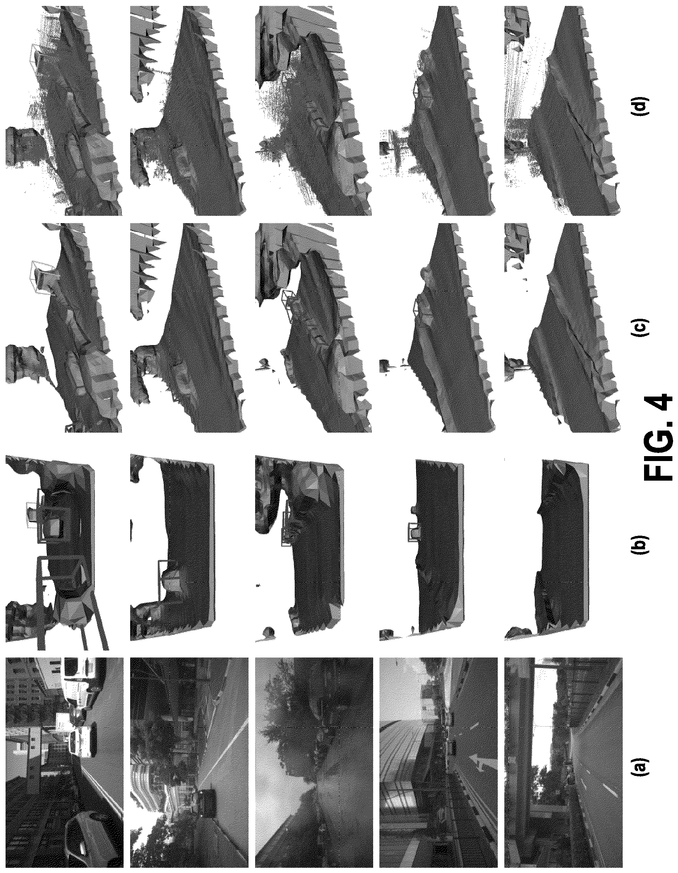

Figure 4 shows a plurality of environments and, for each environment, i.e. each row: (a) the image of the environment; (b) the reconstructed environment from the sensor viewpoint; (c) the reconstructed environment from an overhead viewpoint; and (d) the reconstructed environment as in (c), compared with the ground truth LiDAR points used for evaluation, shown as dots superimposed on the image of (c). For a better visualization, the reconstructions are annotated with the 3D bounding boxes predicted by the front-end object detector (the detection module 30), which are used to condition the implicit function network 50. From these results it can be seen that the system 10 is able to model complex scene geometry, accurately capturing the shapes of objects such as cars and correctly localise the boundaries of the road surface. It can additionally handle challenging edge-cases such as cluttered scenes (first row), adverse weather conditions (third row) and objects which are distant from the camera (fourth row).

Further tests show that the system 10 generally outperforms baselines based either on the bounding boxes alone as described in above-quoted Liu et al., without any implicit function network, or on the implicit function network alone as described in above-quoted Saito et al., without any conditioning based on shape information. Notably, the system 10 performs particularly well when evaluated at the object level. Detailed analysis shows that the system 10 takes advantage of the explicit knowledge of predicted object locations, and thus produces results of significantly higher sharpness than the competitors. This observation emphasises the value of the bounding box (or more generally shape information) feature conditioning described above. At the scene level, the system 10 turns out to have a tendency of over-estimating the geometry of background elements of the scene such as trees and buildings. However this is partially compensated for by the fact that it outperforms both baselines on the scene completeness metric, indicating that fewer elements of the background are missed.

To further understand the behaviour of the system 10, an analysis is conducted to disentangle the shape information conditioning performance from the accuracy of the underlying detection module by providing ground truth bounding boxes at test time. This analysis shows that providing more accurate boxes at inference time dramatically improves the performance of the metric. Since the system 10 is agnostic to the choice of front-end object detection architecture, these results provide optimism that future developments in monocular object detection will further improve the efficacy of the proposed system.

Finally, an ablation study shows that the component of the bounding box encoding $z_{box}$ most critical for performance is the encoding of the object dimensions $z_{dim}$. Ablating this component resulted in a significant increase in error across most metrics. By contrast, further ablating the class encoding $z_{class}$ resulted in a minor improvement in error, which was presumably due to overfitting to the class label.

Ablating the pixel-aligned image-features $z_{image}$ caused the reconstruction over the background regions of the scene to fail completely, since the implicit function network 50 cannot exploit any local information in these regions. For the areas corresponding to objects however, this variant was still able to achieve surprisingly good reconstructions despite never having seen the object in an image. This suggests that the bounding boxes alone provide strong prior shape information for common objects in the scene.

Although the present disclosure refers to specific exemplary embodiments, modifications may be provided to these examples without departing from the general scope of the invention as defined by the claims. In particular, although the image encoder and the detection module have been presented separately and operating independently from each other, they could be implemented together, e.g. with the detection module being part of the image encoder, or being configured to take the features as an input, instead of the image.

Besides, the system 10 may also be used to determine more advanced properties of the scene than occupancy, namely physical properties of objects such as reflectivity, color, material, density, etc. The accuracy increase due to the shape information will also help predicting these properties more precisely. Moreover, although no pseudo-ground truth may be derivable in the same way as the inverse sensor model described above, it can be assumed that transitions in property happen at the surface of objects (e.g., in the above embodiment, the level set corresponding to $f_\theta(x,z) = 0.5$). In this perspective, the implicit function network would not be penalized whichever property value it produces for "free space" (like air between the acquisition point and the object). Conversely, errors would be penalized only at points sampled from the surface. When training is finished, the property values could be taken into consideration only for points of the predicted property field which intersect with points of the surface. Note that any prediction of a physical property such as reflectivity, color, material, density, etc., inherently contains an occupancy probability.

More generally, individual characteristics of the different illustrated/mentioned embodiments may be combined in additional embodiments. Therefore, the description and the drawings should be considered in an illustrative rather than in a restrictive sense.

## Claims

1. A system (10) for predicting an occupancy probability of at least one point (x) in an environment, based on at least one image (12) of said environment, the system (10) comprising an image encoder (20) configured to extract features (22) from the at least one image (12), a detection module (30) configured to detect at least one object in the image (12) and to associate shape information (32) to the detected at least one object, and an implicit function network (50) configured to predict the occupancy probability ($p(ô)$) based on the features (22) and the shape information (32).

2. The system of claim 1, wherein the shape information (32) defines a bounding box of the detected at least one object.

3. The system of claim 2, wherein the shape information (32) comprises dimensions ($z_{dim}$) of the bounding box and/or an offset ($z_{local}$) of the at least one point in a local coordinate system of the bounding box.

4. The system of any one of claims 1 to 3, wherein the detection module (30) is further configured to determine a category ($z_{class}$) of the detected at least one object, and the implicit function network (50) is configured to take the category ($z_{class}$) as an input to predict the occupancy probability ($p(ô)$).

5. The system of any one of claims 1 to 4, wherein the at least one image (12) is a single monocular image.

6. The system of any one of claims 1 to 5, wherein the environment is a three-dimensional outdoor scene and the at least one image (12) is two-dimensional.

7. The system of any one of claims 1 to 6, further comprising a conditioning module (40) configured to receive the features (22) from the image encoder (20), to sample the features at a location corresponding to a projection of the at least one point (x) into the at least one image (12) in order to generate a conditioning vector ($z_{image}$), and to output the conditioning vector ($z_{image}$) to the implicit function network (50).

8. A method for predicting an occupancy probability of at least one point (x) in an environment, based on at least one image (12) of said environment, the method comprising extracting features (22) from the at least one image (12),

detecting at least one object in the image and associating shape information (32) to the detected at least one object, and predicting the occupancy probability ($p(\hat{o})$) with an implicit function network (50), based on the features (22) and the shape information (32).

9. A training method (100) for training the system (10) of any one of claims 1 to 7, comprising obtaining (102) at least one image of an environment, obtaining (104) sparse sensor data acquired by a sensor in the environment, deriving (106) pseudo-ground-truth data for the occupancy probability from the sparse sensor data, and training (112) the system (10) with the at least one image and the pseudo-ground-truth data.

10. The training method of claim 9, wherein the deriving (106) pseudo-ground-truth data comprises evaluating occupancy probabilities for points on a straight line extending from an acquisition point of the sparse sensor data and through a given point belonging to the sparse sensor data, wherein the given point is determined to have a high occupancy probability ($p_1$), points between the acquisition point and the given point are determined to have a low occupancy probability ($p_0$), and points from the given point and beyond are determined to have a decreasing probability from the high probability ($p_1$) to an intermediate probability ($p_{prior}$) greater than the low probability ($p_0$).

11. The training method of claim 9 or 10, wherein the sparse sensor data include data acquired from a plurality of poses of the sensor.

12. The training method of any one of claims 9 to 11, comprising sampling (110) points of the environment for training based on at least one sampling strategy selected from a group comprising:

- a surface strategy giving a greater importance to a training point close to points for which sparse sensor data is available than to a training point away from said points.
- a uniform strategy giving uniform importance to training points uniformly selected along a straight line segment from an acquisition point of the sparse sensor data to a given point belonging to the sparse sensor data;
- a sparse strategy assigning a low occupancy probability to training points selected in a region of the environment where a density of training points is relatively small; and
- an object-centric strategy giving a greater importance to training points which belong to objects of the environment for which the amount of sparse sensor data is relatively small.

13. The training method of any one of claims 9 to 12, comprising augmenting (108) the sparse sensor data by considering the symmetry of objects detected by the sensor.

14. A computer program including instructions for executing the steps of the method of any one of claims 8 to 13 when said program is executed by a computer.

15. A recording medium readable by a computer and having recorded thereon a computer program including instructions for executing the steps of the method of any one of claims 8 to 13.

**FIG. 1**

EP 4 152 274 A1

100

```
┌───────┐
│  102  │
└───────┘
    │
    ▼
┌───────┐
│  104  │
└───────┘
    │
    ▼
┌───────┐
│  106  │
└───────┘
    │
    ▼
┌───────┐
│  108  │
└───────┘
    │
    ▼
┌───────┐
│  110  │
└───────┘
    │
    ▼
┌───────┐
│  112  │
└───────┘
```

# FIG. 2

FIG. 3

**FIG. 4**

(a)      (b)      (c)      (d)

Europäisches
Patentamt

European
Patent Office

Office européen
des brevets

# EUROPEAN SEARCH REPORT

**Application Number**

**EP 21 19 7966**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | SAITO SHUNSUKE ET AL: "PIFu: Pixel-Aligned Implicit Function for High-Resolution Clothed Human Digitization", 2019 IEEE/CVF INTERNATIONAL CONFERENCE ON COMPUTER VISION (ICCV), IEEE, 27 October 2019 (2019-10-27), pages 2304-2314, XP033723888, DOI: 10.1109/ICCV.2019.00239 [retrieved on 2020-02-24] * Section 3; figure 2 * | 1-15 | INV. G06V10/82 G06T7/00 G06V20/58 |
| | ----- | | |
| A | SAITO SHUNSUKE ET AL: "PIFuHD: Multi-Level Pixel-Aligned Implicit Function for High-Resolution 3D Human Digitization", 2020 IEEE/CVF CONFERENCE ON COMPUTER VISION AND PATTERN RECOGNITION (CVPR), IEEE, 13 June 2020 (2020-06-13), pages 81-90, XP033803379, DOI: 10.1109/CVPR42600.2020.00016 [retrieved on 2020-08-03] * Section 3.2; figure 2 * * Section 3.3 * * Section 3.4 * * Section 5 * | 1-15 | TECHNICAL FIELDS SEARCHED (IPC) G06V G06T |
| | ----- | | |
| | -/-- | | |

The present search report has been drawn up for all claims

| Place of search | Date of completion of the search | Examiner |
|---|---|---|
| The Hague | 21 February 2022 | Boltz, Sylvain |

**page 1 of 2**

Europäisches
Patentamt

European
Patent Office

Office européen
des brevets

**EUROPEAN SEARCH REPORT**

Application Number

EP 21 19 7966

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | RODDICK THOMAS ET AL: "On the Road to Large-Scale 3D Monocular Scene Reconstruction using Deep Implicit Functions", 2021 IEEE/CVF INTERNATIONAL CONFERENCE ON COMPUTER VISION WORKSHOPS (ICCVW), IEEE, 11 October 2021 (2021-10-11), pages 2875-2884, XP034027644, DOI: 10.1109/ICCVW54120.2021.00322 [retrieved on 2021-11-08] * the whole document * ----- | | |
| | | | **TECHNICAL FIELDS SEARCHED (IPC)** |

The present search report has been drawn up for all claims

| Place of search | Date of completion of the search | Examiner |
|---|---|---|
| **The Hague** | **21 February 2022** | **Boltz, Sylvain** |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................................

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHUNSUKE SAITO ; ZENG HUANG ; RYOTA NATSUME ; SHIGEO MORISHIMA ; ANGJOO KANAZAWA ; HAO LI.** Pifu: Pixel-aligned implicit function for high-resolution clothed human digitization. *Proceedings of the IEEE/CVF International Conference on Computer Vision,* 2019, 2304-2314
- **WILLIAM E LORENSEN ; HARVEY E CLINE.** Marching cubes: A high resolution 3D surface construction algorithm. *ACM siggraph computer graphics,* 1987, vol. 21 (4), 163-169
- **YUXUAN LIU ; YUAN YIXUAN ; MING LIU.** Ground-aware monocular 3d object detection for autonomous driving. *IEEE Robotics and Automation Letters,* 2021, vol. 6 (2), 919-926
- **ANDREA SIMONELLI ; SAMUEL ROTA BULO ; LORENZO PORZI ; MANUEL LOPEZ-ANTEQUERA ; PETER KONTSCHIEDER.** Disentangling monocular 3d object detection. *Proceedings of the IEEE/CVF International Conference on Computer Vision,* 2019, 1991-1999
- **GARRICK BRAZIL ; XIAOMING LIU.** M3d-rpn: Monocular 3d region proposal network for object detection. *Proceedings of the IEEE/CVF International Conference on Computer Vision,* 2019, 9287-9296
- **THOMAS RODDICK ; ALEX KENDALL ; ROBERTO CIPOLLA.** Orthographic feature transform for monocular 3d object detection. *British Machine Vision Conference,* 2019

- **HOLGER CAESAR ; VARUN BANKITI ; ALEX H LANG ; SOURABH VORA ; VENICE ERIN LIONG ; QIANG XU ; ANUSH KRISHNAN ; YU PAN ; GIANCARLO BALDAN ; OSCAR BEIJBOM.** NuScenes: A multimodal dataset for autonomous driving. *Proceedings of the IEEE/CVF conference on computer vision and pattern recognition,* 2020, 11621-11631
- **THOMAS RODDICK ; ROBERTO CIPOLLA.** Predicting semantic map representations from images using pyramid occupancy networks. *Proceedings of the IEEE/CVF Conference on Computer Vision and Pattern Recognition (CVPR),* June 2020
- **KAIMING HE ; XIANGYU ZHANG ; SHAOQING REN ; JIAN SUN.** Deep residual learning for image recognition. *Proceedings of the IEEE conference on computer vision and pattern recognition,* 2016, 770-778
- **J. DENG ; W. DONG ; R. SOCHER ; L. LI ; KAI LI ; LI FEI-FEI.** ImageNet: A large-scale hierarchical image database. *2009 IEEE Conference on Computer Vision and Pattern Recognition,* 2009, 248-255
- Are we ready for autonomous driving? The KITTI vision benchmark suite. **ANDREAS GEIGER ; PHILIP LENZ ; RAQUEL URTASUN.** 2012 IEEE Conference on Computer Vision and Pattern Recognition. IEEE, 2012, 3354-3361